# EUROPEAN PATENT APPLICATION

(11) **EP 3 505 924 A1**
(43) Date of publication of application: **03.07.2019**
(21) Application number: 16914244.5
(22) Date of filing: 26.08.2016
(51) Int. Cl.: G01N 27/62

(54) **MASS-SPECTROMETRY-IMAGING-DATA PROCESSING DEVICE**

(71) Applicant: Shimadzu Corporation, Kyoto-shi, Kyoto 604-8511 (JP)
(72) Inventor: OGATA, Koretsugu, Kyoto-shi Kyoto 604-8511 (JP); IKEGAMI, Masahiro, Kyoto-shi Kyoto 604-8511 (JP)
(74) Representative: Mewburn Ellis LLP
(86) International application number: PCT/JP2016/075095
(87) International publication number: WO 2018/037570

(57) **Abstract**

An optical image formation unit (23) forms an optical image of an interest region based on data obtained through image acquiring of the surface of a specimen (S), and an intensity image production unit (22) produces an intensity image illustrating ion spatial distribution at an m/z value specified based on mass spectrum data obtained for each measurement point in the interest region. An image superimposing processor (25) produces an image by superimposing the optical image and the intensity image at a predetermined m/z value in accordance with an instruction from a user, and a display processor (26) displays the image on a screen of a display unit (6). When the user performs a predetermined operation, the display processor (26) displays a set screen for adjusting the brightness and contrast of the optical image, and an image parameter adjustment unit (24) changes the brightness and contrast of the optical image in the superimposed image independently from the intensity image in accordance with an operation on the screen. Accordingly, when an acquired optical image is too bright, it is possible to display a superimposed image on which, for example, spatial distribution of components is easy to observe.

## Description

### TECHNICAL FIELD

The present invention relates to an imaging mass spectrometric data processing device configured to process data obtained by an imaging mass spectrometer.

### BACKGROUND ART

A mass spectrometric imaging method is a method of examining spatial distribution of a material having a particular mass-to-charge ratio by performing mass spectrometry for each of a plurality of measurement points (minute regions) in a two-dimensional region of a specimen such as a piece of living body tissue. The method has been increasingly applied to, for example, pharmaceutical development, bio marker search, and search for the causes of various illnesses and diseases. A mass spectrometer for performing mass spectrometric imaging is typically called an imaging mass spectrometer. In many cases an observation through an optical microscope is first performed on a two-dimensional region on a specimen, an analysis target region is determined based on the optical image thus obtained, and then an imaging mass spectrometry is executed for the region. Thus the imaging mass spectrometer is also called a mass spectrometry microscope or a mass microscope. In the present specification, the device is referred to as "imaging mass spectrometer".

Normally, the imaging mass spectrometer gives out image data of an optical image on a specimen, and mass spectrum data for a large number of measurement points in a predetermined region on the specimen, usually, one or a plurality of regions of interest specified by a user. A data processor in the imaging mass spectrometer produces, based on the mass spectrum data for each measurement point, an intensity image (hereinafter also referred to as mass spectrometric image or MS image) illustrating spatial distribution of a signal intensity at a particular mass-to-charge ratio specified by the user, and then the image is displayed on a screen of a display unit. The intensity image is like a heat map associating signal intensity values with various colors. In a conventional device, the same spatial distribution of signal intensity values can be displayed in different colors in the intensity image by selecting a color scale (color table) used in display. In addition, it is possible to select the display color and change the brightness of the colors.

As disclosed in Non Patent Literature 1, a conventional imaging mass spectrometer is capable of displaying an image obtained by superimposing an intensity image of a predetermined mass-to-charge ratio value and an optical image to allow a user to easily perform analyses such as analysis of the function of a living body tissue and material search related to functional and morphological changes. The conventional imaging mass spectrometer is also capable of displaying an image obtained by superimposing an optical image on an image obtained by superimposing a plurality of intensity images of different mass-to-charge ratio values. Normally, an optical image clearly displays, for example, the shape and pattern of a living body tissue, and the boundary between different tissues. Thus, a superimposed image as described above has a large advantage of allowing easy understanding of the relation between the shape and pattern of a living body tissue and distribution of a particular material.

However, it is difficult on some measurement objects to perceive material distribution or distinguish the pattern of a living body tissue or the boundary line between different tissues from the boundary of material intensity distribution in a conventional superimposed image. Thus, when a user needs to check a minute part on an image, the user has to see an image of a target place by repeating (repeatedly turning on and off) superimposing of an optical image on the intensity image to use the afterimage effect in some cases. Such work is cumbersome for the user, and also it is impossible to store the checked image as information.

### CITATION LIST

### NON PATENT LITERATURE

Non Patent Literature 1: "Superimposition of iMScope TRIO Imaging Mass Microscope Optical Image/MS Imaging Mass Spectrometry", [online], [Search August 17, 2016], Shimadzu Corporation, Internet <URL: http://www.an.shimadzu.co.jp/bio/imscope/overlay.htm>

### SUMMARY OF INVENTION

### TECHNICAL PROBLEM

The present invention is intended to solve the above-described problem and provide an imaging mass spectrometric data processing device capable of accurately providing information needed by a user in an easily recognizable manner when an image is produced by superimposing an intensity image and an optical image and displayed.

### SOLUTION TO PROBLEM

To solve the above-described problem, a first aspect of the present invention is an imaging mass spectrometric data processing device configured to process data obtained by an imaging mass spectrometer including an image acquiring unit configured to acquire data indicating an optical image on a specimen, and a mass spectrometry unit configured to acquire data indicating intensity distribution of ions having a particular one or a plurality of mass-to-charge ratios in a two-dimensional region on the specimen. The imaging mass spectrometric data processing device includes:
a) an optical image formation unit configured to form an optical image based on optical image data;
b) an intensity image production unit configured to produce an intensity image reflecting intensity distribution of ions at a particular one or a plurality of mass-to-charge ratios or in a mass-to-charge ratio range based on mass spectrometric data;
c) an image adjustment unit configured to adjust brightness and/or contrast of the optical image formed by the optical image formation unit; and
d) a superimposing image display processor configured to produce an image by superimposing the optical image of a region, which is adjusted by the image adjustment unit, and the intensity image of the region, which is produced by the intensity image production unit, with each other, and display the produced image on a screen of a display unit.

Intensity images produced by the intensity image production unit include not only an intensity image produced by associating a color on a color table with an ion signal intensity value at a particular mass-to-charge ratio calculated from the mass spectrum data at each measurement point in the two-dimensional region. Examples of the intensity images include: an intensity image using a total ion current (TIC) value calculated from the mass spectrum data at each measurement point in the two-dimensional region; an intensity image using a signal intensity value at a base peak in the mass spectrum data at each measurement point in the two-dimensional region; an intensity image using a ratio of signal intensity values of a plurality of mass-to-charge ratios in the mass spectrum data at each measurement point in the two-dimensional region or a value obtained through addition, subtraction, multiplication, or division of the signal intensity values; an intensity image based on a result obtained by performing statistics processing such as primary component analysis on the mass spectrum data at each measurement point in the two-dimensional region.

In the imaging mass spectrometer, typically, the range of a two-dimensional region on a specimen from which mass spectrometric data is acquired is determined by the user checking, on the display screen, an optical image formed by the optical image formation unit based on data acquired by the image acquiring unit. Thus, when the image acquiring unit acquires an image of the specimen, typically, image acquiring ring conditions such as the brightness and contrast of the image are adjusted so that a pattern or the like on the specimen can be observed as clearly as possible. In a conventional imaging mass spectrometer, data acquired under such conditions is stored as optical image data in a memory or the like and used in superimposing with an intensity image. When the image acquiring conditions are adjusted to allow clear observation of an image as described above, the brightness and contrast of the image tend to be set to be high.

Studies by the inventors of the present application have shown that, when an intensity image and an optical image are superimposed on each other, the visibility of a superimposed image obtained by superimposing a dark optical image having clear outlines and an intensity image having bright colors is likely to be high. Thus, the brightness and contrast of an optical image suitable for obtaining a superimposed image having high visibility normally do not match with image acquiring conditions set for high visibility of the optical image.

In the imaging mass spectrometric data processing device according to the first aspect of the present invention, however, the image adjustment unit adjusts the brightness and contrast of the optical image independently from, for example, the color and brightness of the intensity image. The superimposing image display processor produces an image by superimposing the adjusted optical image and the intensity image produced by the intensity image production unit, and displays the produced image on the screen of the display unit. Thus, irrespective of image acquiring conditions when the optical image is acquired by the image acquiring unit, the brightness and contrast of the optical image can be adjusted to allow easy visual recognition of the image obtained by superimposing the optical image and the intensity image or clearly display, for example, an observation target place or spatial distribution.

It is preferable that the imaging mass spectrometric data processing device according to the first aspect of the present invention further includes an adjustment operation unit through which the brightness and/or contrast of the optical image is adjusted by a user, and the image adjustment unit adjusts the brightness and/or contrast of the optical image in accordance with an operation through the adjustment operation unit.

With this configuration, when the user appropriately adjusts the brightness and/or contrast of the optical image through the adjustment operation unit, the image adjustment unit adjusts, in accordance with the operation, the brightness and contrast of the optical image independently from, for example, the color and brightness of the intensity image. When the user having checked a displayed image as a result of the adjustment further adjusts the brightness and contrast of the optical image through the adjustment operation unit, the brightness and contrast of the optical image in the superimposed image are changed in accordance with the operation. Thus, irrespective of image acquiring conditions when the optical image is acquired by the image acquiring unit, the user can adjust the brightness and contrast of the optical image to allow easy visually recognition of the image obtained by superimposing the optical image and the intensity image or clearly display, for example, an observation target place or spatial distribution.

The adjustment operation unit may display, on the screen of the display unit, an operation screen such as a slider as a graphical user interface (GUI) component for adjusting brightness and contrast or an input box to which an adjustment value is input as a numerical value, and receive an input operation corresponding to the display.

It is preferable that, in the imaging mass spectrometric data processing device according to the first aspect of the present invention, the operation screen of the adjustment operation unit and the superimposed image produced by the superimposing image display processor are displayed in different regions on the same screen of the display unit. With this configuration, the user can adjust the brightness and contrast of the optical image on the operation screen while checking the state of the displayed superimposed image, and thus can efficiently perform the task.

In the imaging mass spectrometric data processing device according to the first aspect of the present invention, the intensity image production unit may produce an intensity image at a specified mass-to-charge ratio, and further produces a superimposed intensity image by superimposing intensity images of a plurality of specified mass-to-charge ratios, the adjustment operation unit may have a function of allowing a user to specify a display color of each intensity image, and the image adjustment unit may have a function of changing the display color of each intensity image of the superimposed intensity image in accordance with the specification through the adjustment operation unit.

With this configuration, an optical image can be superimposed with not only an intensity image at one mass-to-charge ratio but also an image obtained by superimposing intensity images of a plurality of mass-to-charge ratios. In this case, when intensity images at the plurality of mass-to-charge ratios are superimposed on each other, there is a concern that it may be difficult to distinguish spatial distributions at the respective mass-to-charge ratios or a spatial distribution potentially may appear to be a different spatial distribution, depending on display colors of the intensity images. Such failure can be reduced by appropriately selecting the display color for each intensity image by the user.

In the imaging mass spectrometric data processing device according to the first aspect of the present invention as described above, the user needs to adjust the brightness and contrast of an optical image to improve the visibility of a superimposed image, but the adjustment may be automatically performed. Alternatively, the visibility of the superimposed image can be improved by automatically adjusting colors of an intensity image superimposed with the optical image in accordance with colors of the optical image instead of adjusting the brightness and contrast of the optical image.

Specifically, to solve the above-described problem, a second aspect of the present invention is an imaging mass spectrometric data processing device configured to process data obtained by an imaging mass spectrometer including an image acquiring unit configured to acquire data indicating an optical image on a specimen, and a mass spectrometry unit configured to acquire data indicating intensity distribution of ions having a particular one or a plurality of mass-to-charge ratios in a two-dimensional region on the specimen. The imaging mass spectrometric data processing device includes:
a) an optical image formation unit configured to form an optical image based on optical image data;
b) an intensity image production unit configured to produce an intensity image reflecting intensity distribution of ions at a particular one or a plurality of mass-to-charge ratios or in a mass-to-charge ratio range based on mass spectrometric data;
c) an image color adjustment unit configured to adjust a display color of the intensity image produced by the intensity image production unit in accordance with a color of the optical image formed by the optical image formation unit, or adjust the color of the optical image formed by the optical image formation unit in accordance with the display color of the intensity image produced by the intensity image production unit; and
d) a superimposing image display processor configured to produce an image by superimposing the optical image of a region, the color of which is adjusted by the image color adjustment unit, and the intensity image of the region, which is produced by the intensity image production unit, with each other, or by superimposing the intensity image of the region, the display color of which is adjusted by the image color adjustment unit, and the optical image of the region, which is formed by the optical image formation unit, with each other, and display the produced image on a screen of a display unit.

For example, the above-described image color adjustment unit disassembles the optical image formed by the optical image formation unit into three primary colors (R, G, B), and calculates the average of the value (luminance value) of each color component over the whole image. Then, the image color adjustment unit may calculate a complementary color or opposite color of the color and allocate the calculated color to the display color of the intensity image. Accordingly, it is possible to display a superimposed image in which the optical image and the intensity image superimposed on each other are respectively easily visually recognized.

### ADVANTAGEOUS EFFECTS OF INVENTION

The imaging mass spectrometric data processing device according to the present invention allows an intensity image and an optical image to be easily visually distinguished in one image obtained by superimposing the intensity image and the optical image. Accordingly, for example, when a specimen such as a piece of living body tissue is observed, it is possible to accurately recognize, for example, spatial distribution of a component included in the specimen, and the pattern and boundary between different tissues on the specimen. In addition, an image having high brightness and contrast can be acquired as an optical image with priority on the visibility of the optical image, and thus it is possible to accurately set an interest region of mass spectrometry with reference to the optical image.

### BRIEF DESCRIPTION OF DRAWINGS

Fig. 1 is a schematic configuration diagram of an imaging mass spectrometry system including an imaging mass spectrometric data processing device according to an embodiment of the present invention.
Fig. 2 is a schematic diagram of an intensity image display screen in the imaging mass spectrometry system according to the present embodiment.
Fig. 3 is a detailed diagram of a display adjustment instruction region in the intensity image display screen illustrated in Fig. 2.
Fig. 4 is a diagram illustrating the relation between an intensity value and a color in an intensity image.
Figs. 5A and 5B are detailed diagrams of an imaging set region in the intensity image display screen illustrated in Fig. 2: Fig. 5A is a diagram illustrating a screen at adjustment of an intensity image, and Fig. 5B is a diagram illustrating a screen at adjustment of an optical image.
Fig. 6 is a diagram illustrating exemplary display of the intensity image display screen in the imaging mass spectrometry system according to the present embodiment.

### DESCRIPTION OF EMBODIMENTS

The following describes an imaging mass spectrometry system including an imaging mass spectrometric data processing device according to an embodiment of the present invention with the accompanying drawings.

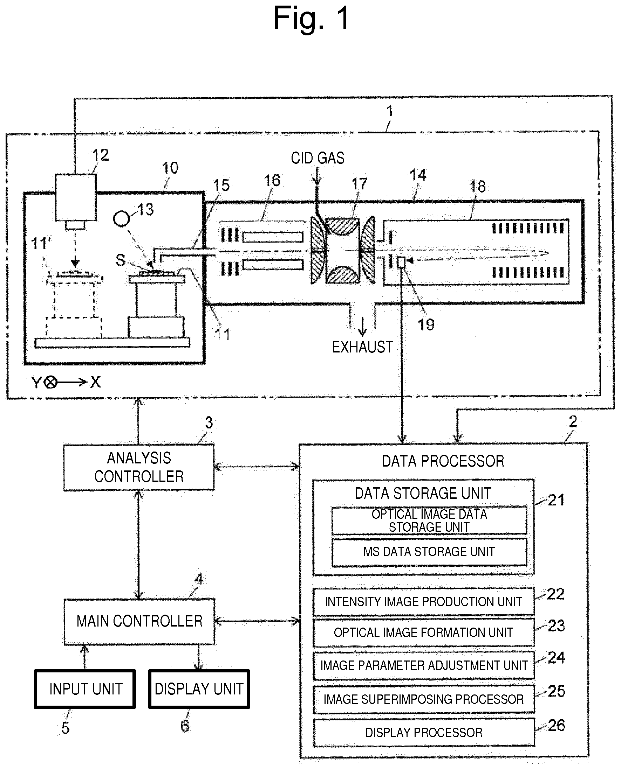

Fig. 1 is a schematic configuration diagram of the imaging mass spectrometry system according to the present embodiment.

An imaging mass spectrometer according to the present embodiment includes: a measurement unit 1 capable of executing mass spectrometry for each of a large number of measurement points (minute regions) in a two-dimensional region on a specimen S to acquire mass spectrum data each measurement point; a data processor 2 configured to store and process the data obtained by the measurement unit 1; an analysis controller 3 included in the measurement unit 1 and configured to control operation of each component; a main controller 4 configured to control the entire system and govern, for example, an user interface; an input unit 5 configured to be operated by a user; and a display unit 6 configured to provide, for example, an analysis result to the user.

The measurement unit 1 is a MALDI ionization ion trap time-of-flight mass spectrometer (MALDI-IT-TOFMS) capable of performing MSⁿ analysis. Specifically, the measurement unit 1 includes a specimen table 11 disposed in an ionization chamber 10 containing an atmospheric pressure atmosphere and capable of moving in two axial directions of an X axis and a Y axis orthogonal to each other, an image acquiring unit 12 configured to acquire an optical image of the specimen S placed on the specimen table 11 when the specimen table 11 is at a position (hereinafter referred to as "observation position") indicated by reference sign 11' in Fig. 1, a laser irradiation unit 13 configured to ionize a component in the specimen S by irradiating the specimen S with a laser beam having a minute diameter when the specimen table 11 is at a position (hereinafter referred to as "analysis position") illustrated with solid lines in Fig. 1, an ion feed unit 15 configured to collect ions generated from the specimen S and convey the ions into a vacuum chamber 14 maintained at a vacuum atmosphere, an ion guide 16 configured to converge and guide the ions generated from the specimen S, an ion trap 17 configured to temporarily capture the ions by a high-frequency quadrupolar electric field and perform selection of precursor ions and dissociation (collision-induced dissociation; CID) of the precursor ions as necessary, a flight tube 18 forming inside a flight space in which ions emitted from the ion trap 17 are separated in accordance with the mass-to-charge ratios of the ions, and a detector 19 configured to detect ions.

The data processor 2 includes, as characteristic functional blocks of the imaging mass spectrometry system according to the present embodiment, a data storage unit 21, an intensity image production unit 22, an optical image formation unit 23, an image parameter adjustment unit 24, an image superimposing processor 25, and a display processor 26. The data storage unit 21 includes an optical image data storage unit and an MS data storage unit.

Typically, the functions of at least some of the data processor 2, the main controller 4, and the analysis controller 3 are achieved by operating, on a personal computer (or higher-performance work station) as a hardware resource including a CPU, a RAM, and a ROM, dedicated control and processing software installed on the computer. In this case, the input unit 5 is a pointing device such as a keyboard or a mouse, and the display unit 6 is a display monitor.

The following schematically describes an operation performed to collect data through measurement on the specimen S in the imaging mass spectrometry system according to the present embodiment.

The specimen S is prepared by placing a measurement target specimen such as a piece of living body tissue on a MALDI sample plate and applying an appropriate matrix on the surface of the specimen. The user (analyst) sets the prepared specimen S onto the specimen table 11 and performs a predetermined operation through the input unit 5. Then, under control of the analysis controller 3 having received an instruction from the main controller 4, the specimen table 11 is moved to the observation position, and the image acquiring unit 12 acquires an optical image of a predetermined range on the specimen S and transfers image data of the optical image to the data processor 2. The image data is stored in the data storage unit 21. The optical image formation unit 23 forms the optical image of the specimen S based on the optical image data, and displays the optical image on a screen of the display unit 6 through the main controller 4.

The user refers to the optical image displayed on the display unit 6 and specifies, through the input unit 5, an interest region to be observed on the specimen S. Then, the user sets an analysis condition and the like and instructs analysis start. Having received this instruction, the analysis controller 3 controls the measurement unit 1 to execute mass spectrometry on each measurement point in the interest region set on the specimen S.

Specifically, in the measurement unit 1, when one measurement point on the specimen S is irradiated with a pulsed laser beam from the laser irradiation unit 13, a component in the specimen S near this irradiated site is ionized. Generated ions are conveyed into the vacuum chamber 14 through the ion feed unit 15, converged through the ion guide 16, introduced into the ion trap 17, and temporarily held due to the effect of the quadrupolar electric field. These various ions are emitted from the ion trap 17 at a predetermined timing and introduced into the flight space in the flight tube 18, fly through the flight space, and reach the detector 19. While flying through the flight space, the various ions are separated from each other in accordance with the mass-to-charge ratios of the ions, and reach the detector 19 in ascending order of mass-to-charge ratio. An analog detection signal from the detector 19 is converted into digital data by an analog-digital converter (not illustrated) and then input to the data processor 2, where the time of the flight is converted into a mass-to-charge ratio and stored as mass spectrum data in the data storage unit 21.

When the mass spectrum data for one measurement point in the interest region on the specimen S is stored in the data storage unit 21 in this manner, the specimen table 11 is moved so that a measurement point on the specimen S to be subjected to next measurement moves to a laser beam irradiation position. Through repetition of the above-described operation, the mass spectrum data for all measurement points in the interest region specified by the user is collected.

When MS/MS (= MS²) analysis is executed, various ions generated from the specimen S are temporarily captured in the ion trap 17, and then unnecessary ions other than ions having a particular mass-to-charge ratio is removed from the ion trap 17. Then, collision gas (CID gas) is introduced into the ion trap 17 to excite the remaining ions (precursor ions) so that the ions are prompted to cleave through contact with the collision gas. Thereafter, product ions generated through the cleavage are emitted from the ion trap 17 and detected through mass spectrometry, thereby obtaining MS/MS spectrum (product ion spectrum) data.

The above-described operation at measurement in the measurement unit 1 is same as that of a conventional imaging mass spectrometer.

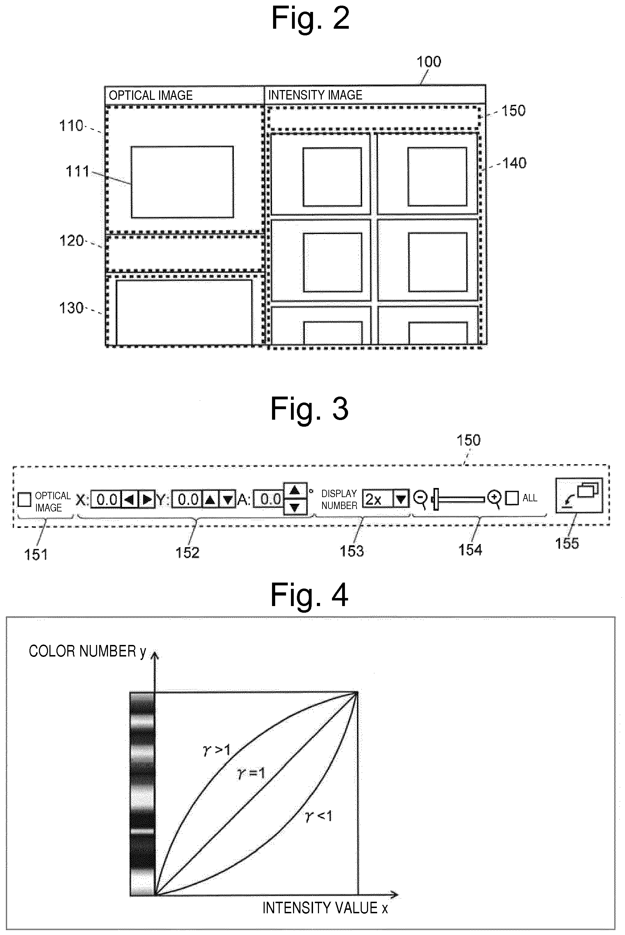

The imaging mass spectrometry system according to the present embodiment is characterized in a data processing operation performed by the data processor 2 while the mass spectrum data (or MS/MS spectrum data) as described above is stored in the data storage unit 21, more specifically, a data processing operation for displaying an image based on data on the display unit 6. The operation will be described below with reference to Figs. 2 to 6.

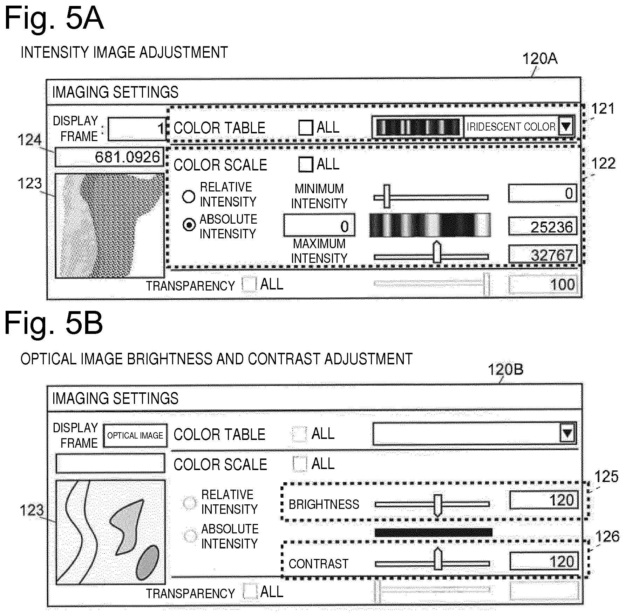

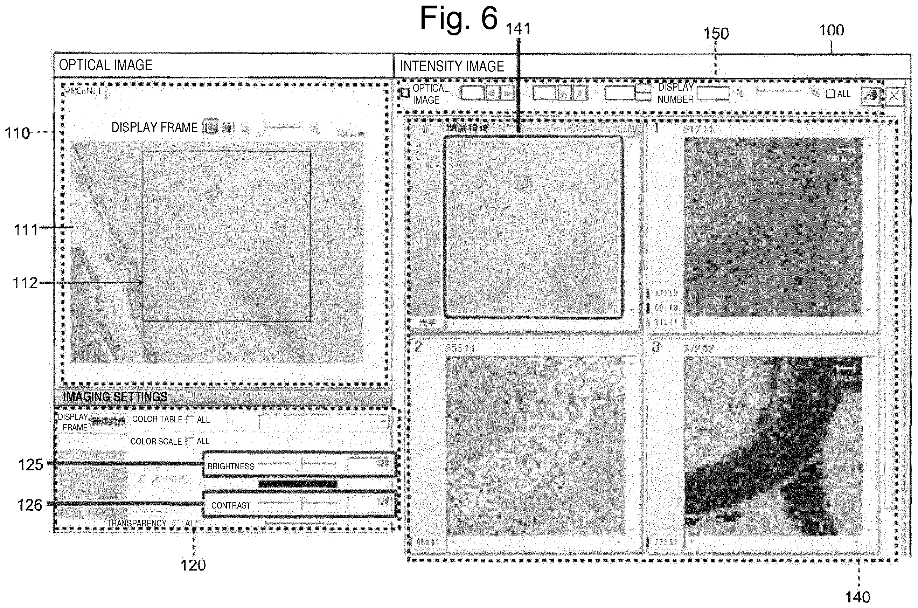

Fig. 2 is a schematic diagram of an intensity image display screen. Fig. 3 is a detailed diagram of a display adjustment instruction region in the intensity image display screen illustrated in Fig. 2. Fig. 4 is a diagram illustrating the relation between an intensity value and a color in an intensity image. Figs. 5(a) and 5(b) are detailed diagrams of an imaging set region in the intensity image display screen illustrated in Fig. 2: Fig. 5A is a diagram illustrating a screen at adjustment of an intensity image, and Fig. 5B is a diagram illustrating a screen at adjustment of an optical image. Fig. 6 is a diagram illustrating exemplary display of the intensity image display screen in the imaging mass spectrometry system according to the present embodiment.

When the user performs a predetermined operation on the input unit 5 to observe an intensity image, an intensity image display screen 100 as illustrated in Fig. 2 is displayed on the screen of the display unit 6.

The intensity image display screen 100 includes an optical image display region 110, an imaging set region 120, an imaging specification m/z list display region 130, an intensity image display region 140, and a display adjustment instruction region 150.

The optical image formed by the optical image formation unit 23 based on the optical image data stored in the data storage unit 21 is displayed in the optical image display region 110. As illustrated in Fig. 6, a frame 112 indicating the interest region specified by the user may be displayed in a superimposing manner on an optical image 111 displayed in the optical image display region 110.

A list of m/z values registered by the user is displayed in the imaging specification m/z list display region 130. The list includes, for each m/z value, a check box for selecting whether to display an intensity image in the intensity image display region 140, and information indicating the position of the intensity image when displayed (in this example, the position is specified by a number allocated in accordance with a position in the intensity image display region 140). Thus, the intensity image for an optional m/z value among the m/z values in the list can be displayed in the intensity image display region 140 by checking an appropriate check box in the list displayed in the imaging specification m/z list display region 130. The intensity image is produced based on the mass spectrum data read from the data storage unit 21 by the intensity image production unit 22.

Fig. 6 illustrates an example in which an optical image of the interest region is displayed at an upper-left position in the intensity image display region 140 whereas an intensity image is displayed at another position, but it is preferable that these positions can be interchanged as appropriate.

As illustrated in Fig. 3, the display adjustment instruction region 150 includes, sequentially from the left side, an optical image superimposing selection check box 151, an optical image positioning operation part 152, an intensity image display number selection box 153, an intensity image enlargement instruction part 154, and a superimposing cancellation button 155. The user checks the optical image superimposing selection check box 151 to superimpose, from behind, an optical image with an intensity image displayed in the intensity image display region 140. Having received this operation, the image superimposing processor 25 produces a superimposed image by superimposing, from behind, an optical image having a display frame of the currently displayed interest region with all intensity images of the same interest region, and displays the produced superimposed image.

The optical image and the intensity image superimposed on each other are of the same interest region, but a positional shift occurs between the images in some cases. This is because, for example, the optical image is acquired before the matrix is applied to the specimen, and then the sample plate is temporarily removed from the specimen table 11, the matrix is applied on the specimen surface, and then the sample plate is set on the specimen table 11 again, which leads to the positional shift.

The position of the optical image in the superimposed image can be adjusted by using the optical image positioning operation part 152. Specifically, the optical image positioning operation part 152 is provided with the three buttons of a horizontal positional shift adjustment button, a vertical positional shift adjustment button, and a rotational position difference adjustment button. When these buttons are clicked, the optical image in the superimposed image can be horizontally or vertically translated or can be rotated in accordance with the number of clicks. Alternatively, a moving amount and a rotation angle may be directly input as numerical values into a numerical value input box.

When the optical image is moved or rotated by operating the optical image positioning operation part 152, the optical image after the movement or rotation is shifted from the display frame of the intensity image, and part of the intensity image is superimposed with no optical image. In other words, part of the optical image disappears. However, in the imaging mass spectrometer according to the present embodiment, the disappearing optical image is compensated by using the optical image data stored in the optical image data storage unit so that the optical image is completely superimposed on the intensity image. Accordingly, a superimposed image without discomfort can be displayed when the user performs the operation of moving and rotating the optical image.

When an intensity image displayed in the intensity image display region 140 is to be superimposed, the intensity image displayed in the intensity image display region 140 and to be placed in front is selected through a click operation and moved through a drag and drop operation to above an intensity image to be superimposed (to be placed behind). Accordingly, an intensity image on which the display frames of both images coincide with each other can be displayed. In addition, it may be possible to superimpose three intensity images or more through the same procedure.

An intensity image is a heat map on which a difference in a signal intensity value is expressed in a color difference, a color concentration difference, or a grayscale, and the display color of the image can be adjusted as described below.

To adjust (change) any display color of an intensity image displayed in the intensity image display region 140, the user clicks the intensity image or the display frame of the intensity image. Then, having received this instruction, the display processor 26 displays a screen (120A) illustrated in Fig. 5A in the imaging set region 120. The specified intensity image is displayed in an image display frame 123 of this imaging set region 120A, and the m/z value corresponding to the image is displayed as a numerical value in an m/z value display box 124 above.

In addition, a color table setting part 121 and a color scale setting part 122 in the imaging set region 120A become active. To change the color table of the intensity image displayed in the image display frame 123, a desired color table is selected from a pull-down menu in the color table setting part 121 (an "iridescent color" color table is selected in Fig. 5A). To change all color tables of a plurality of intensity images displayed in the intensity image display region 140 at once, an "all" check box in the color table setting part 121 is checked.

When the color scale of the intensity image displayed in the image display frame 123 is changed, selection between "relative intensity" and "absolute intensity" is performed at the color scale setting part 122 ("absolute intensity" is selected in Fig. 5A), and the minimum intensity of the color scale is set through a slider operation or numerical value inputting to an input box. In addition, the maximum intensity of the color scale is set through a slider operation or numerical value inputting to an input box with reference to the maximum intensity value in the intensity image. The maximum intensity value in the intensity image is displayed in a box on the right side of a color scale image sandwiched between the two upper and lower sliders.

The display colors (color tables and color scales) of intensity images at mass-to-charge ratios different from each other, which are displayed in the intensity image display region 140 can be each independently set and adjusted. Accordingly, for example, the intensity images can be displayed in display colors different between the mass-to-charge ratios. To change all color scales of a plurality of intensity images displayed in the intensity image display region 140 at once (in other words, to set the same display color), an "all" check box in the color scale setting part 122 is checked.

When the operation of changing or adjusting a color table or a color scale is performed as described above, the image parameter adjustment unit 24 changes the color of an intensity image in accordance with changed or adjusted settings.

In this example, the color table contains 256 colors, and the color numbers of 1 to 256 are allocated to the respective colors. Normally, a color is allocated to each pixel in an intensity image proportionally to the signal intensity value of the pixel. Specifically, when "relative intensity" is set in the color scale setting part 122, the (y = 256 × (x/M))-th color is allocated to a pixel having a signal intensity value x, where M represents the signal intensity value of a pixel having the maximum intensity in the intensity image. In this case, the signal intensity value is proportional to the color number in the color table. However, when a plurality of intensity images are superimposed on each other or an intensity image and an optical image are superimposed on each other as described above, it is difficult to identify spatial distribution of components in some cases. To improve image visibility in such a case, the relation between the signal intensity value and the color number in the color table can be adjusted by γ correction in the present system.

Fig. 4 illustrates the relation between the signal intensity value and the color in an intensity image when the γ correction is performed. When the γ correction is performed, the relation between the signal intensity value x of a pixel and the color number y is represent by y = 256 × (x/M)^{1/γ}. Normally (when γ = 1), the middle (128-th) color in the color table is allocated to a middle signal intensity value relative to the maximum signal intensity value. However, for example, when γ is set to be two in the γ correction, the 181-th color is allocated to the middle signal intensity value, and a color at a higher gradation is allocated to an intensity value lower than the middle signal intensity value. Accordingly, the difference between the intensity values of pixel having small signal intensity values can be more clearly expressed. Specifically, the visibility of the intensity difference between pixels having small signal intensity values is improved when γ is set to be larger than one, or the visibility of the intensity difference between pixels having large intensity values is improved when γ is set to be smaller than one.

When the γ correction is to be performed on an intensity image, the intensity image is specified by clicking the intensity image in the intensity image display region 140, and then the γ correction is selected from a display menu. Accordingly, the display processor 26 displays a pop-up screen for setting the value of γ. When the user sets the value of γ, the image parameter adjustment unit 24 changes the relation between the signal intensity value of a pixel and the color number in accordance with the set γ value, and the color of the displayed intensity image is changed accordingly.

Although an intensity image is displayed in colors in accordance with the color table and the color scale as described above, an optical image is an optical microscope image of the specimen S, and thus originally has colors at image acquiring. The optical image is referred to by the user when setting an interest region, and thus, for example, pattern difference and color difference on the surface of the interest region need to clearly appear, and image acquiring conditions such as brightness and contrast are set to achieve excellent visibility of the differences. An optical image acquired under such image acquiring conditions can be easily observed when checked on the screen of the display unit 6, but is often not necessarily suitable when the optical image is superimposed with an intensity image as described above. Specifically, in many cases, it is desirable that the optical image is dark and has high contrast for clear visual recognition of spatial distribution of a component in a superimposed image obtained by superimposing the intensity image and the optical image, and a pattern or the like on the surface of the specimen, but the optical image is normally too bright.

Thus, in the present system, the brightness and contrast of the optical image can be adjusted separately from color adjustment of the intensity image as described below.

Specifically, to adjust the brightness and contrast of the optical image, the user clicks the optical image displayed in the intensity image display region 140. Then, having received this instruction, the display processor 26 displays a screen (120B) illustrated in Fig. 5B in the imaging set region 120. The specified optical image is displayed in the image display frame 123 in the imaging set region 120A. In addition, the color table setting part 121 and the color scale setting part 122 become inactive in the imaging set region 120B, and instead, a brightness adjustment part 125 and a contrast adjustment part 126 become active.

The user adjusts the brightness of the optical image by operating a slider of the brightness adjustment part 125 or directly inputting a numerical value into a numerical value input box. The user also adjusts the contrast of the optical image by operating a slider of the contrast adjustment part 126 or directly inputting a numerical value into a numerical value input box. Having received these adjustment operations, the image parameter adjustment unit 24 changes the brightness and contrast of the optical image displayed in the intensity image display region 140, and also changes the brightness and contrast of an optical image superimposed with an intensity image. The visibility of a superimposed image obtained by superimposing an intensity image and an optical image can be improved through this adjustment of the brightness and contrast of the optical image and the above-described adjustment of the color of the intensity image.

In the above-described embodiment, the adjustment to improve the visibility of a superimposed image obtained by superimposing an intensity image and an optical image is manually performed by the user, but may be automatically performed.

Specifically, the image parameter adjustment unit 24 may automatically adjust the brightness and contrast of the optical image irrespective of an operation by the user. For example, the image parameter adjustment unit 24 may perform processing of reducing entire brightness by a predetermined ratio when the brightness (luminance) of the optical image is equal to or higher than a predetermined value, or processing of reducing brightness so that a brightest site in the optical image is limited to a predetermined brightness.

Alternatively, the color of an intensity image may be automatically adjusted in accordance with the color of an optical image. Specifically, for example, the image parameter adjustment unit 24 disassembles an optical image formed by the optical image formation unit 23 into three primary colors (R, G, B), and calculates the average of the value (luminance value) of each color component as the whole image. Then, the image parameter adjustment unit 24 calculates a complementary color or opposite color of the color, and allocates the color to the display color of an intensity image. The luminance values of three RGB primary colors are represented by (R, G, B). For example, when the optical image has a color of RGB (255, 72, 172), the sum "327" of the maximum value "255" and the minimum value "72" is used to obtain R = 327 - 255, G = 327 - 72, and B = 327 - 172, in other words, RGB (72, 255, 155), by subtracting the RGB values from the sum, and then the obtained values are set to the display color of the intensity image.

When the opposite color is used instead of the complementary color, values obtained by subtracting "255" from average RGB values of the entire optical image may be allocated to the display color of the intensity image. For example, when the optical image has a color of RGB (255, 128, 80), R = 255 - 255, G = 255 - 128, B = 255 - 80, in other words, RGB (0, 127, 175) are set to the display color of the intensity image.

Rightly, the above-described embodiment is merely an example of the present invention, and the claims of the present application include change, correction, and addition made as appropriate in the scope of the present invention.

### REFERENCE SIGNS LIST

- 1...: Measurement Unit
- 10...: Ionization Chamber
- 11(11')...: Specimen Table
- 12...: Image Acquiring Unit
- 13...: Laser Irradiation Unit
- 14...: Vacuum Chamber
- 15...: Ion Feed Unit
- 16...: Ion Guide
- 17...: Ion Trap
- 18...: Flight Tube
- 19...: Detector
- 2...: Data Processor
- 21...: Data Storage Unit
- 22...: Intensity image Production Unit
- 23...: Optical Image Formation Unit
- 24...: Image Parameter Adjustment Unit
- 25...: Image Superimposing Processor
- 26...: Display Processor
- 3...: Analysis Controller
- 4...: Main Controller
- 5...: Input Unit
- 6...: Display Unit
- S...: Specimen
- 100...: Intensity image Display Screen
- 110...: Optical Image Display Region
- 111...: Optical Image
- 112...: Frame Indicating Interest Region
- 120, 120A, 120B...: Imaging Set Region
- 121...: Color Table Setting Part
- 122...: Color Scale Setting Part
- 123...: Image Display Frame
- 124...: m/z Value Display Box
- 125...: Brightness Adjustment Part
- 126...: Contrast Adjustment Part
- 130...: Imaging Specification m/z List Display Region
- 140...: Intensity image Display Region
- 150...: Display Adjustment Instruction Region
- 151...: Optical Image Superimposing Selection Check Box
- 152...: Optical Image Positioning Operation Part
- 153...: Intensity image Display Number Selection Box
- 154...: Intensity image Enlargement Instruction Part
- 155...: Superimposing Cancellation Button

## Claims

1. An imaging mass spectrometric data processing device configured to process data obtained by an imaging mass spectrometer including an image acquiring unit configured to acquire data indicating an optical image on a specimen, and a mass spectrometry unit configured to acquire data indicating intensity distribution of ions having a particular one or a plurality of mass-to-charge ratios in a two-dimensional region on the specimen, the imaging mass spectrometric data processing device comprising:
a) an optical image formation unit configured to form an optical image based on optical image data;
b) an intensity image production unit configured to produce an intensity image reflecting intensity distribution of ions at a particular one or a plurality of mass-to-charge ratios or in a mass-to-charge ratio range based on mass spectrometric data;
c) an image adjustment unit configured to adjust brightness and/or contrast of the optical image formed by the optical image formation unit; and
d) a superimposing image display processor configured to produce an image by superimposing the optical image of a region, which is adjusted by the image adjustment unit, and the intensity image of the region, which is produced by the intensity image production unit, with each other, and display the produced image on a screen of a display unit.

2. The imaging mass spectrometric data processing device according to claim 1, further comprising an adjustment operation unit through which the brightness and/or contrast of the optical image is adjusted by a user, wherein
the image adjustment unit adjusts the brightness and/or contrast of the optical image in accordance with an operation through the adjustment operation unit.

3. The imaging mass spectrometric data processing device according to claim 2, wherein the adjustment operation unit displays, on the screen of the display unit, an operation screen including at least one of a GUI component for adjusting the brightness and/or contrast and an input box to which an adjustment value is input as a numerical value, and receives an input operation corresponding to the display.

4. The imaging mass spectrometric data processing device according to claim 3, wherein the operation screen of the adjustment operation unit and a superimposed image produced by the superimposing image display processor are displayed in different regions on the same screen of the display unit.

5. The imaging mass spectrometric data processing device according to any one of claims 2 to 4, wherein
the intensity image production unit produces an intensity image at a specified mass-to-charge ratio, and further produces a superimposed intensity image by superimposing intensity images of a plurality of specified mass-to-charge ratios, and
the adjustment operation unit has a function of allowing a user to specify a display color of each intensity image, and the image adjustment unit has a function of changing the display color of each intensity image of the superimposed intensity image in accordance with specification through the adjustment operation unit.

6. An imaging mass spectrometric data processing device configured to process data obtained by an imaging mass spectrometer including an image acquiring unit configured to acquire data indicating an optical image on a specimen, and a mass spectrometry unit configured to acquire data indicating intensity distribution of ions having a particular one or a plurality of mass-to-charge ratios in a two-dimensional region on the specimen, the imaging mass spectrometric data processing device comprising:
a) an optical image formation unit configured to form an optical image based on optical image data;
b) an intensity image production unit configured to produce an intensity image reflecting intensity distribution of ions at a particular one or a plurality of mass-to-charge ratios or in a mass-to-charge ratio range based on mass spectrometric data;
c) an image color adjustment unit configured to adjust a display color of the intensity image produced by the intensity image production unit in accordance with a color of the optical image formed by the optical image formation unit, or adjust the color of the optical image formed by the optical image formation unit in accordance with the display color of the intensity image produced by the intensity image production unit; and
d) a superimposing image display processor configured to produce an image by superimposing the optical image of a region, the color of which is adjusted by the image color adjustment unit, and the intensity image of the region, which is produced by the intensity image production unit, with each other, or by superimposing the intensity image of the region, the display color of which is adjusted by the image color adjustment unit, and the optical image of the region, which is formed by the optical image formation unit, with each other, and display the produced image on a screen of a display unit.

7. The imaging mass spectrometric data processing device according to any one of claims 1 to 6, wherein the intensity image production unit produces an intensity image based on a result obtained by statistically processing the mass spectrometric data.
